# EUROPEAN PATENT APPLICATION

(11) **EP 0 668 241 A1**
(43) Date of publication of application: **23.08.1995**
(21) Application number: 94301067.8
(22) Date of filing: 14.02.1994
(51) Int. Cl.: C01B 17/60, C01B 17/04, B01D 53/34

(54) **Method and apparatus for recovering elemental sulfur from flue gas**

(71) Applicant: EXXON RESEARCH AND ENGINEERING COMPANY, Florham Park, New Jersey 07932-0390 (US)
(72) Inventor: Serrand, Willibald, D-85114 Buxheim (DE)
(74) Representative: Somers, Harold Arnold

(57) **Abstract**

A method and apparatus for recovering elemental sulfur from flue gas are described. Raw flue gas containing sulfur moieties is oxidised, and the resulting sulfur oxides (SOX)-containing gas is contacted with moist active carbon particles in the presence of oxygen to form H₂SO₄.

H₂SO₄ associated with carbon particles is reduced to elemental sulfur by H₂S in a reduction step, and the elemental sulfur is recovered. Gas containing unreacted H₂S is oxidised with the raw flue gas and/or employed to reduce H₂SO₄ and/or by-product S0₂ in the reduction step.

The sole products of the process are desul- furised flue gas and elemental sulfur.

## Description

The present invention relates to a method and apparatus for recovering elemental sulfur from flue gas containing sulfur oxide (S0₂, S0₃, etc., herein designated "SOₓ").

The combustion of sulfur-containing fuels and fuel materials produces flue gases containing SOₓ. SO_{X} is generally regarded as an atmospheric pollutant, and in many industrial installations, it is increasingly common to treat SOₓ₋containing flue gas to remove SO_{X} before it is discharged to the atmosphere. In many countries, there are regulations requiring that flue-gas from electricity generating plant is treated to remove SO_{X} before discharge to the atmosphere. Similar regulations do not apply (in 1994) to all sulfur-containing waste gases from chemical plant and oil refineries, except for H₂S-containing gas streams from oil hydrofining operations.

The commoner SOₓ₋removal processes are of the so-called "wet"-type, and often employ aqueous liquids which are contacted with the flue gas to remove SO_{X} therefrom by dissolution therein. Wet processes have the drawbacks of being expensive and of reducing the flue gas temperature during contact, thereby reducing the buoyancy of the treated gas. The treated gas therefore tends to accumulate in the vicinity of the discharge stack leading to the possibility of increased local pollution. Moreover, most wet processes employ solutions of calcium ions for SO_{X} removal. The calcium reacts with SO_{X} to form calcium sulfate (e.g., gypsum). The calcium sulfate is usually contaminated with ash and corrosive substances, and may be difficult to discard in an environmentally-acceptable manner.

In "dry" SOₓ₋removal processes, flue gas is contacted with solids which are active for SO_{X} absorption, and SOₓ₋depleted gas at a relatively high temperature can be discharged to atmosphere. However, few dry SOₓ₋removal processes are efficient, and their cost-effectiveness is low compared to wet processes.

U.S. patent specification US-A-3563704 describes and claims a process for the removal and recovery of sulfur oxides from gases. In this process, SOₓ₋containing flue gas is contacted with active carbon at temperatures up to 177°C. The active carbon catalyses the reaction of SO_{X} with moisture and oxygen in the gas to sulfuric acid, which is adsorbed on the carbon, and the resulting flue gas of depleted SO_{X} content is discharged to atmosphere. The H₂SO₄-laden carbon is passed to a regenerating zone wherein it is contacted with H₂S at a temperature of up to 299°C. The H₂S reduces the H₂S0₄ to S0₂ and/or elemental sulfur, the relative amounts of which are determined by temperature. S0₂ (if any) is recovered from the regenerating zone, and elemental sulfur remains absorbed on the carbon. The sulfur-loaded carbon is passed to a reducing zone wherein it is contacted with H₂-containing or CO-containing gas which reduces sulfur to H₂S or COS at temperatures above 260°C (e.g., between 427 and 704°C), The resulting carbon is stripped of sulfur and reactivated and can be reused.

A similar process is described in U.S. patent US-A-3789110.

A drawback of the processes disclosed in US-A-3563704 and US-A-3789110 is that the products of the process include S0₂ and H₂S (in addition to low-SOₓ flue gas), and neither of these gases is usually useful at an industrial site, and each is an undesirable by-product requiring disposal or conversion.

One object of the present invention is to provide a method of removing SO_{X} from flue gas wherein the foregoing drawback is avoided. This object is of particular, but not exclusive, interest or utility in the context of an SOₓ-removal process suitable for application to waste gases from oil refinery processes (such as fluidised catalytic cracking), coking processes, refinery furnace operations and power plant.

Another, independent, object of the invention is to avoid the use of a manufactured reducing gas to recover sulfur-stripped carbon which can be reused in the process. Such manufactured reducing gases (such as producer gas) are relatively expensive to produce.

A further independent objective is to employ a low-cost reducing gas to recover elemental sulfur from H₂SO₄-loaded active carbon. Such reducing gases are often available at oil refineries and some chemical plant.

Yet a further independent objective is to provide a low-cost simple process for reducing the amount of sulfur compound discharged to the environment.

Another, independent, object of the invention is to remove SO_{X} from a flue gas and to obtain elemental sulfur as the sole product. Elemental sulfur is a useful product, and this contrasts with the products or by-products previously obtained from flue gas clean-up processes. Such previous products or by-products, such as partially sulfated lime, are often terrestrial or marine pollutants requiring disposal with special care or precautions.

The present invention provides a method of obtaining elemental sulfur from an oxygen-containing flue gas containing sulfur oxides (SOₓ) comprising the steps of: (a) contacting the flue gas with active carbon in the presence of oxygen and water in an absorption step operated at a temperature in the range 110° to 150°C whereby sulfur oxides react with water to form sulfuric acid which is retained on the active carbon, discharging from the absorption step a flue gas of reduced SO_{X} content; (b) contacting active carbon containing retained sulfuric acid obtained in the absorption step (a) with an H₂S-containing gas in a reaction step operated at a temperature in the range 120 to 200 °C whereby sulfuric acid and H₂S react to form elemental sulfur, at least some of which is retained on the active carbon, discharging a gas depleted in H₂S from the reaction step; (c) contacting active carbon containing elemental sulfur from the reaction step with a non-oxidising hot gas or vapour in a desorption step operated at a sulfur-desorbing temperature and separately recovering (i) a gas containing elemental sulfur and (ii) active carbon depleted in elemental sulfur; (f) re-using active carbon from desorption step (c) in absorption step (a); and (g) cooling the sulfur-containing gas from step (f) to condense elemental sulfur.

The present invention, in another aspect, provides apparatus suitable for performing the said method, and optionally for performing one or more of the preferred modes thereof as described herein.

Preferably, a gas depleted in elemental sulfur is recovered from the cooling step (g). The said gas may be incinerated in the presence of oxygen to convert sulfur moieties to SOₓ. The resulting SOₓ-containing gas may be passed to the absorption step (a). Alternatively, the sulfur-depleted gas from step (g) may be circulated to step (b).

The reaction step (b) and/or the desorption step (c) may result in the formation or liberation of S0₂, as explained herein. A gas containing S0₂ may be (at least in part) circulated from the desorption step (c) to the reaction step (b) wherein it may be converted to elemental sulfur by reaction with H2 S.

Gas depleted in H₂S discharged from the reaction step (b) may be incinerated in the presence of oxygen to convert sulfur moieties to SOₓ. The resulting SOₓ-containing gas may be passed to the absorption step (a). Alternatively, or in addition, gas depleted in H₂S from the reaction step (b) may be circulated to the reduction step whereby residual H₂S reacts with S0₂ in the reduction zone to produce further quantities of elemental sulfur.

Preferably, the hot gas or vapour employed in step (c) is substantially non-oxidising at the sulfur-desorbing temperature.

The SOₓ-containing flue gas may be obtained by burning or incinerating a gas containing sulfur moieties.

Preferably, the sulfur moieties-containing gas contains at least one reducing or combustible component.

Preferably, the sulfur moieties-containing gas is a waste gas derived or obtained from a carbon- burning facility of a hydrocarbon processing unit such as a FCCU or fluid coker or gasifier, or is a combined waste gas stream derived or obtained from one or more of the foregoing in combination with a waste gas stream from one or more oil refinery furnaces.

Preferably, the gas containing sulfur moieties is at an elevated temperature and is employed as the hot gas in step (c).

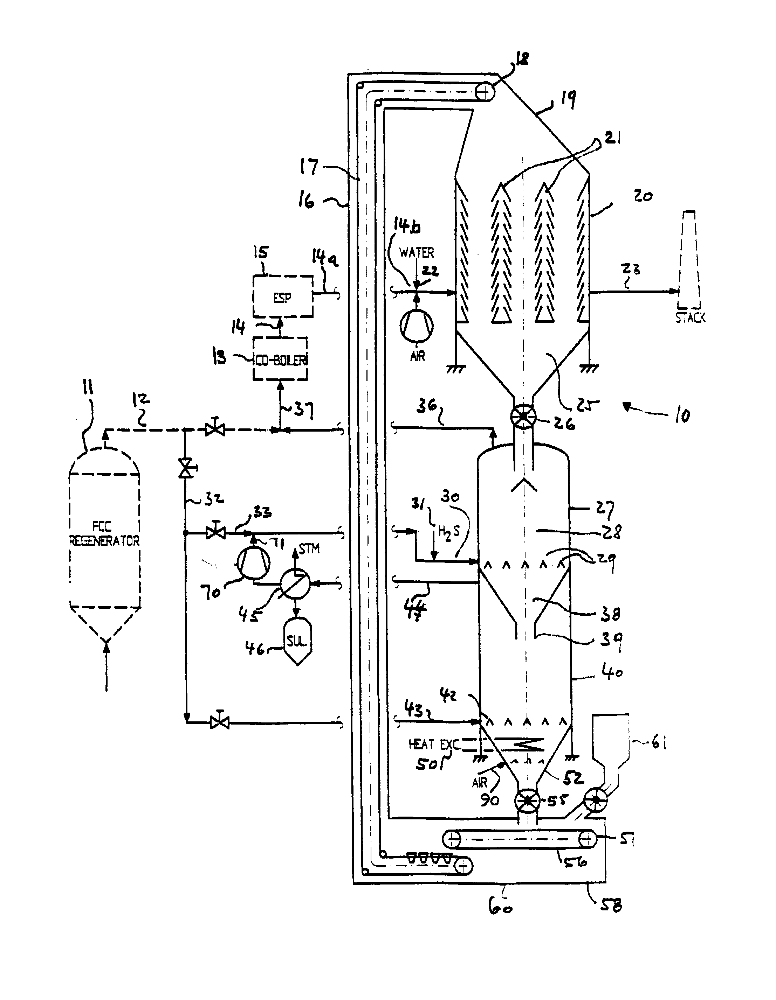

An embodiment of the invention, given by way of non-limitative example only, is now described with reference to the accompanying drawing which is a schematic diagram of the principal features of a plant for recovering elemental sulfur from flue gas containing SOₓ.

In the illustrated plant, generally indicated by reference 10, the oxygen-containing flue gas containing sulfur oxide (SOX) is a flue gas obtained from the regenerator 11 of a fluidised catalytic cracking unit (FCCU). It could alternatively be waste gas from a fluidised coking unit or from a gasifier or from any furnace at an oil refinery, or a combined waste gas from one or more of the foregoing waste gas sources.

The regenerator 11 of the FCCU (not shown in full) is, in this embodiment, operated under net reducing conditions, as will be known and understood by those skilled in the art.

The flue gas leaving the regenerator 11 via conduit 12 comprises carbon monoxide and sulfur compounds. The gas is burned with added air in a so-called "CO-boiler" 13 wherein the CO (and any other combustible material) is oxidised, with the liberation of heat which is partly recovered in the boiler. The sulfur moieties are oxidised to sulfur oxides, SOₓ.

The flue gas leaving the CO-boiler 13 via conduit 14 contains some unused oxygen and is at a temperature of about 175°C. It passes via an electrostatic precipitator 15 and then via a conduit 14a into a conditioning duct 14b of a vessel 20 which contains an SOₓ-absorption zone. Water from pipe 22 is added to the gas passing via duct 14b, and air may also be added thereto, for optimum operating conditions in the SOₓ-absorption zone. The thus-conditioned flue gas passes in a generally horizontal sense across the vessel 20 wherein its SO_{X} content is reduced, as explained herein, whereafter the resulting SOₓ-depleted flue gas passes into a conduit 23, from where it may be discharged to atmosphere.

Within the vessel 20, water-containing particles of active carbon form a bed. Carbon particles pass downwardly until the action of gravity and thereby are contacted with the horizontally flowing flue gas.

The particles of carbon are raised from a lower level to the level of the top of the vessel 20 by a vertical bucket lift 17 operating in a vertical conduit 16.

The bucket lift 17 comprises an endless belt to which buckets or hoppers (not shown), containing the particles of active carbon, are pivotally connected. As the buckets pass over the top wheel 18 of the lift, they tilt and discharge their contents into the top of a conduit 19. The bottom of the conduit 19 is connected to the top of the vessel 20 containing the SOₓ-absorption zone.

The vessel 20 contains arrays of inclined baffles 21 which promote horizontal dispersion of vertically-moving carbon particles so that there is good contact between the carbon particles in the vessel 20 and the horizontally-flowing conditioned flue gas.

The active carbon particles promote the formation of sulfuric acid from components of the conditioned gas, according to the empirical reaction schemes :

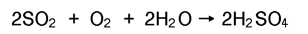

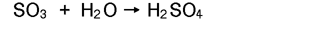

Sulfuric acid is adsorbed on the surface of the carbon particles at a temperature in the range of from about 120 to 150°C, e.g., about 130°C.

As a result, flue gas which is substantially depleted in SO_{X} is discharged from vessel 20 via the conduit 23, from where it may be discharged to the atmosphere. In addition, particles (e.g., fly ash) entrained in the gas entering the vessel 20 are removed, and these tend to associate with the carbon particles. Such particles are removed from the carbon particles when the latter are screened later in the process, as will be explained herein.

Active carbon containing adsorbed sulfuric acid forms a bed 25 in the vessel 20 above a rotary valve 26. The bed 25 forms a seal and prevents purified flue gas passing downwardly into a reduction vessel 27 below the valve 26.

The rotary valve 26 controls the flow of carbon particles downwardly into the reduction vessel 27 where the particles pack to form a downwardly- moving bed 28. Pitched baffles 29 within the vessel 27 maintain an open structure for the bed 28.

An H₂S-containing gas is passed into the bed 28 from a pipe 30. The gas may be formed from H₂S provided at conduit 31 mixed with "raw" flue gas from the FCCU regenerator 11, supplied via pipes 32 and 33 to a lower region of bed 28. Cooled gas from line 44 (described below) and a cooler 45 (also described below) is circulated by a fan 70 into the line 30 and thence into the bed 28. The flue gas is introduced at a suitable rate to control the temperature of the bed 28 to about 150°C. At this temperature, the H2 S reacts with the H2 S04 on the carbon particles according to the following empirical reaction schemes :

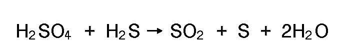

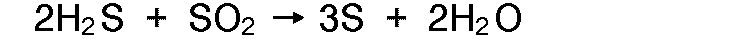

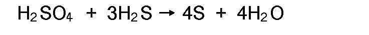

An exit gas containing (inter alia) H₂S and/or S0₂ is recovered in line 36 from where it passes into line 37 and thence into the CO-boiler 13 wherein sulfur moieties are oxidised to SO_{X} in the flue gas therein.

The elemental sulfur produced by the reaction of H2S and H₂ SO₄ remains associated with the carbon particles as they descend to the conical base 38 of the vessel 27. The conical base 38 has a hole in its bottom which provides a downward exit of particles via a vertical pipe 39 into a sulfur- desorption vessel 40.

Within the vessel 40, carbon particles descend while hot gas rises therein to strip elemental sulfur from the particles at a temperature in the range of about 350 ° C to 400 ° C.

One stream of hot gas is supplied to a sparger or distributor 42 (which may comprise pitched baffles) from line 43. Line 43 is connected to line 32 so as to receive hot, raw non-oxidising flue gas discharged into line 12 from the FCCU regenerator 11. The counter-current contact between the descending sulfur-loaded carbon particles and the rising gas stream promotes desorption of sulfur from the particles, and the desorbed elemental sulfur is entrained with the gas stream. The resulting sulfur-containing gas stream leaves the vessel 40 via line 44 and is conducted to a sulfur-condenser 45 which may be of known and/or conventional design. Elemental sulfur is collected in a container 46 and the heat of condensation may be employed to generate steam.

The gases containing desorbed elemental sulfur from the region of the baffles 42 and upwardly pass with the gases containing elemental sulfur into the line 44 and sulfur condenser 45 for the recovery of elemental sulfur and subsequent disposal of the gases as previously described herein.

Carbon particles in the vessel 40 at regions below the baffles 42 are substantially stripped of strippable elemental sulfur, and they are then cooled by their downward passage in the vicinity of a cooling coil 50 below the distributor baffles 42.

Just below the cooling zone in the vicinity of the cooling coils 50, air (or another suitable oxygen-containing gas) is introduced from conduit 90 into a bottom region of the vessel 40 to enhance the clean-up and reactivation of the active carbon particles within the desorption zone. The flue gas entering the absorber vessel 20 may contain substances which tend to reduce the activity of the active carbon particles during their use in the process of the invention. Ammonia is one such substance, and under the conditions in the absorber, it can react with SO_{X} to form ammonium sulfate. Ammonium sulfate has a tendency to accumulate on the carbon particles and plug the pores therein thereby reducing their activity. The oxygen of the gas added from the conduit 90 converts ammonium sulfate to N₂, S0₂ and H₂0 under the conditions prevailing in the vessel 40. The oxygen also tends to remove elemental sulfur from the carbon particles, so that pores plugged by elemental sulfur are at least partially cleared, thereby enhancing the activity of the carbon particles. Moreover, oxygen tends to act to open up further active pores in the carbon particles and enhance the activity of the carbon for use as a catalyst in the sulfur-conversion reactions described herein.

The gas leaving the sulfur condenser 45 can be circulated by fan 70 and pipe 71 into pipe 30 so that it adds to the cooled raw flue gas supplied from lines 32 and 33. The gas leaving the sulfur condenser may contain H₂S (inter alia) and the H₂S thus circulated by the fan 70 via pipes 71 and 30 into the reduction zone 28 further reduces any unreduced H₂S0₄ to elemental sulfur. Moreover, any S0₂ in the reduction zone 28 produced by the empirical reaction : H₂S + 3H2 S04 -+ 4H₂0 + 4S0₂ is reduced by H₂S from line 31 in the presence of the active carbon particles according to the empirical Claus reaction:

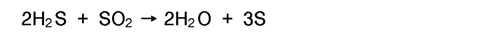

The active carbon particles catalyze the Claus reaction. Elemental sulfur thus produced is retained on the carbon particles in the reduction zone 28, and is recovered in the desorption zone 40 in the manner described herein.

Sulfur-stripped cooled carbon particles accumulate at the base of the conical region 52 to form a gas seal against a rotary valve 55 which closes the bottom. The rotary valve distributes carbon particles onto an endless sieve-transport belt 56 which is supported at each end (at least) by rotating pulley 57. The belt 56 is within an enclosure 58 to prevent the escape to atmosphere of gases. One end of the belt is located to receive carbon particles discharged from the vessel 40 via the rotary valve 55. The other end is arranged to discharge carbon particles thereon into the buckets (not shown) of the bucket lift 17 for re-use in the process as described herein.

Undersized carbon particles and contaminant particles (e.g., fly ash) fall through gaps (not shown) in the belt 56 and are collected at the base 60 of the enclosure 58 from where they may be discarded. The inventory of carbon particles is maintained by adding fresh active particles to the belt 56 from a hopper 61.

It is apparent from the foregoing that the use of the method and/or apparatus of the present invention enables a waste gas containing sulfur moieties to be treated or processed to remove at least some of the sulfur moieties to produce a purer waste gas. The sulfur moieties which are thus removed are recovered as elemental sulfur, a useful material, rather than in the form of another waste gas or solution or solid which itself can present problems of disposal.

## Claims

1. A method of obtaining elemental sulfur from an oxygen-containing flue gas containing sulfur oxides (SOX) comprising the steps of: (a) contacting the flue gas with active carbon in the presence of oxygen and water in an absorption step operated at a temperature in the range 110* to 150_{°}C whereby sulfur oxides react with water to form sulfuric acid which is retained on the active carbon, discharging from the absorption step a flue gas of reduced SO_{X} content; (b) contacting active carbon containing retained sulfuric acid obtained in the absorption step (a) with an H₂S-containing gas in a reaction step operated at a temperature in the range 120 to 200 °C whereby sulfuric acid and H₂S react to form elemental sulfur, at least some of which is retained on the active carbon, discharging a gas depleted in H₂S from the reaction step; (c) contacting active carbon containing elemental sulfur from the reaction step with a hot gas or vapour in a desorption step operated at a sulfur-desorbing temperature and separately recovering (i) a gas containing elemental sulfur and (ii) active carbon depleted in elemental sulfur; (f) re-using active carbon from desorption step (c) in absorption step (a); and (g) cooling the sulfur-containing gas from step (f) to condense elemental sulfur.

2. The method of claim 1 wherein a gas depleted in elemental sulfur is recovered from the cooling step (g), and said gas is either (i) incinerated in the presence of oxygen to convert sulfur moieties to SOₓ, and the resulting SOₓ- containing gas is passed to the absorption step (a); or (ii) circulated to step (b), or employed in a combination of steps (i) and (ii).

3. The method of claim 1 or claim 2 wherein S0₂-containing gas discharged from the desorption step (c) is circulated, at least in part, to the reaction step (b) wherein it is converted with or by H₂S to elemental sulfur.

4. The method of any one of claims 1 to 3 wherein at least some gas depleted in H₂S discharged from the reaction step (b) is incinerated in the presence of oxygen to convert sulfur moieties to SOₓ, and the resulting SOₓ- containing gas is passed to the absorption step (a).

5. The method of any one of claims 1 to 4 wherein the hot gas or vapour employed in step (c) is substantially non-oxidising at the sulfur-desorbing temperature.

6. The method of any one of claims 1 to 5 wherein the SOₓ-containing flue gas is obtained by burning or incinerating a gas containing sulfur moieties.

7. The method of claim 6 wherein the sulfur moieties-containing gas contains at least one reducing or combustible component.

8. The method of claim 6 or claim 7 wherein the sulfur-moieties-containing gas is a waste gas derived or obtained from at least one carbon- burning facility of a hydrocarbon processing unit such as a FCCU and/or a fluid coker and/or a gasifier and/or one or more other oil refinery furnaces.

9. The method of any one of claims 6 to 8 wherein the gas containing sulfur moieties is at an elevated temperature and is employed as the hot gas in step (c).

10. The method of any one of claims 1 to 9 comprising the step of cleaning and/or reactivating carbon particles before they are reused in step (f) (e.g., by the action of an oxygen-containing gas and/or by separating ash-particles from carbon particles).
